(19) Europäisches Patentamt
European Patent Office
Office européen des brevets

(11) **EP 4 105 849 A1**

(12) **EUROPEAN PATENT APPLICATION**

(43) Date of publication:
**21.12.2022 Bulletin 2022/51**

(21) Application number: **22151552.1**

(22) Date of filing: **14.01.2022**

(51) International Patent Classification (IPC):
**G06N 20/00** (2019.01)

(52) Cooperative Patent Classification (CPC):
**G06N 20/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.06.2021 US 202163211537 P**
**29.12.2021 US 202117564240**

(71) Applicant: **Moxa Inc.**
**New Taipei City 242 (TW)**

(72) Inventors:
• **Lee, Wei-Yu**
**New Taipei City 242 (TW)**
• **Wang, Jheng-Yu**
**New Taipei City 242 (TW)**
• **Wang, Yu-Chiang**
**New Taipei City 242 (TW)**

(74) Representative: **Straus, Alexander et al**
**2K Patent- und Rechtsanwälte - München**
**Keltenring 9**
**82041 Oberhaching (DE)**

(54) **DEVICE OF HANDLING DOMAIN-AGNOSTIC META-LEARNING**

(57)    A learning module for handling classification tasks, configured to perform the following instructions: receiving a first plurality of parameters from a training module; and generating a first loss of a first task in a first domain and a second loss of a second task in a second domain according to the first plurality of parameters.

FIG. 3

EP 4 105 849 A1

**Description**

Field of the Invention

The present invention relates to a device for handling domain-agnostic meta-learning.

Background of the Invention

In machine learning, a model learns how to assign a label to an instance to complete a classification task. Several methods in the prior art are proposed for processing the classification task. However, the methods utilize a large amount of training data, and classify only instances within classes the model has seen. It is difficult to classify the instances within the classes that the model has not seen. Thus, a model capable of classifying a wider range of classes, e.g., including the classes not saw by the model, is needed.

Summary of the Invention

The present invention therefore provides a device of handling domain-agnostic meta-learning to solve the abovementioned problem.
This is achieved by a device handling the domain-agnostic meta-learning according to claims 1 and 10. The dependent claims pertain to corresponding further developments and improvements.
As will be seen more clearly from the detailed description following below, the claimed learning module for handling classification tasks, configured to perform the following instructions: receiving a first plurality of parameters from a training module; and generating a first loss of a first task in a first domain and a second loss of a second task in a second domain according to the first plurality of parameters.

Brief Description of the Drawings

Fig. 1 is a schematic diagram of a computing device according to an example of the present invention.
Fig. 2 is a schematic diagram of a learning module according to an example of the present invention.
Fig. 3 is a schematic diagram of a training scheme in an iteration in a meta-training stage in the DAML according to an example of the present invention.
Fig. 4 is a flowchart of a process of operations of Domain-Agnostic Meta-Learning to an example of the present invention.
Fig. 5 is a flowchart of a process according to an example of the present invention.
Fig. 6 is a flowchart of a process according to an example of the present invention.

Detailed Description

A few-shot classification task may include a support set S and a query set Q. A model is given a small amount of labeled data in $S = \{(x_s, y_s)\}$, where $x_s$ are instances in S, and $y_s$ are labels in S. The model classifies the instances in $Q = \{(x_q, y_q)\}$ according to the small amount of labeled data, where $x_q$ are the instances in Q, and $y_q$ are the labels in Q. A label space of Q is the same as the label space of S. Typically, the few-shot classification task may be characterized as a N-way K-shot task, where N is number of classes, and K is number of examples for each class.
A learning process in meta-learning includes two stages: a meta-training stage and a meta-testing stage. In the meta-training stage, a learning model is provided with a large amount of labeled data. The large amount of labeled data may include thousands of instances for a large number of classes. A wide range of classification tasks (e.g., the few-shot classification task) is collected from the large amount of labeled data to train models for simulating testing the learning model. In the meta-testing stage, the learning model is evaluated on a novel task including a novel class.

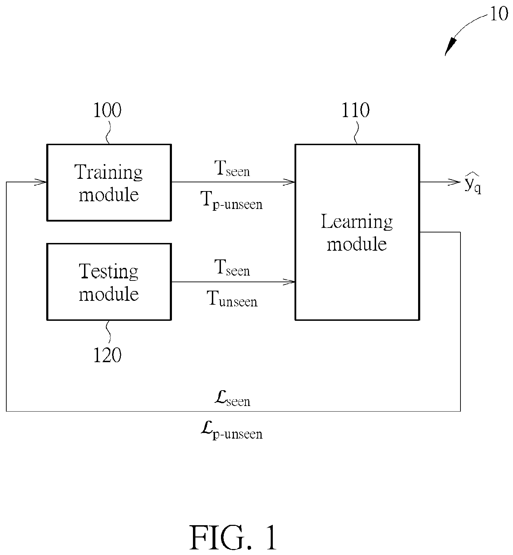

Fig. 1 is a schematic diagram of a computing device 10 according to an example of the present invention. The computing device 10 includes a training module 100, a learning module 110 and a testing module 120. The training module 100 and the testing module 120 are coupled to the learning module 110. The learning module 110 is for realizing the learning model.

In the meta-training stage, the training module 100 and the learning module 110 perform the following operations. The training module 100 transmits a seen domain task $T_{seen}$ and a pseudo-unseen domain task $T_{p-unseen}$ to the learning module 110. The seen domain task $T_{seen}$ may be the few-shot classification task in a seen domain. The pseudo-unseen domain task $T_{p-unseen}$ may be the few-shot classification task in a pseudo-unseen domain. The learning module 110 stores parameters $\varphi$, generates a loss ($\mathcal{L}_{T_{seen}}$) of the seen domain task $T_{seen}$ and a loss ($\mathcal{L}_{T_{p-unseen}}$) of the pseudo-unseen domain task $T_{p-unseen}$ according to the parameters $\varphi$, and transmits the loss $\mathcal{L}_{T_{seen}}$ and $\mathcal{L}_{T_{p-unseen}}$ to the training module 100. The training module 100 updates (e.g., optimize, learn or iterate) the parameters $\varphi$ based on the loss $\mathcal{L}_{T_{seen}}$ and $\mathcal{L}_{T_{p-unseen}}$. That is, the learning module 110 is operated to learn the parameters $\varphi$ from the seen domain task $T_{seen}$ and the pseudo-unseen domain task $T_{p-unseen}$ simultaneously, to enable ability of domain generalization and domain adaptation. The above process may iterate I time(s) to update the parameters $\varphi$ I time(s), where I is a positive integer.

In the meta-testing stage, the testing module 120 transmits the seen domain task $T_{seen}$ and an unseen domain task $T_{unseen}$ to the learning module 110. The unseen domain task $T_{unseen}$ may be the few-shot classification task in an unseen domain. The learning module 110 generates a prediction $\widehat{y_q}$ based on parameters $\varphi_I$, where the parameters $\varphi_I$ are the parameters $\varphi$ of the learning module 110 which have been completed the iterations (e.g., updates or training). The prediction $\widehat{y_q}$ includes the labels assigned by the learning module 110 to classify the instances in the query set Q in the seen domain task $T_{seen}$ and the query set Q in the unseen domain task $T_{unseen}$. That is, the present invention replaces the pseudo-unseen domain task $T_{p-unseen}$ with the unseen domain task $T_{unseen}$ to update the parameters $\varphi$ to adapt to the unseen domain. Note that accuracy of the prediction of the seen domain task $T_{seen}$ is also considered in the meta-testing stage such that the learning module 110 adapts well on the seen domain and the unseen domain.

Domain-Agnostic Meta-Learning (DAML) (e.g., the training module 100, the learning module 110 and the testing module 120 in Fig. 1) jointly observes the seen domain task $T_{seen}$ and the pseudo-unseen task $T_{p-unseen}$ from the seen domain and the pseudo-unseen domain (i.e., data of the seen domain and the data of the pseudo-unseen domain). The seen domain and the pseudo-unseen domain are different, and are generated according to (e.g., sampled from) a plurality of source domains (e.g., same distribution) in the meta-training stage. By minimizing the loss $\mathcal{L}_{T_{seen}}$ and $\mathcal{L}_{T_{p-unseen}}$, a learning objective of the DAML is to learn domain-agnostic initialized parameters (e.g., the parameters $\varphi_I$), which may adapt to the novel class in the unseen domain in the meta-testing stage. Thus, the DAML is applicable to cross-domain few-shot learning (CD-FSL) tasks according to the domain-agnostic initialized parameters.

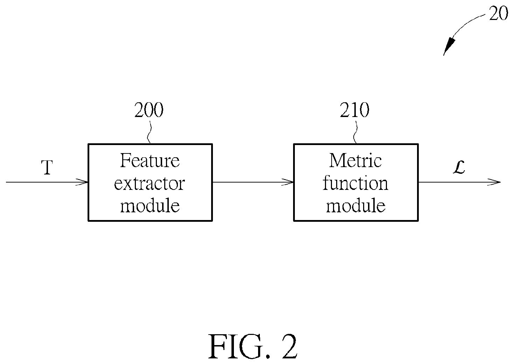

Fig. 2 is a schematic diagram of a learning module 20 according to an example of the present invention. The learning module 20 may be utilized for realizing the learning module 110. The learning module 20 includes a feature extractor module 200 and a metric function module 210. In detail, the feature extractor module 200 extracts a plurality of features from tasks T (e.g., the seen domain task $T_{seen}$, the pseudo-unseen task $T_{p-unseen}$ and the unseen task $T_{unseen}$). The metric function module 210 is coupled to the learning module 20, for generating losses L based on the plurality of features (e.g., generating the loss of the seen domain task $T_{seen}$ ($\mathcal{L}_{T_{seen}}$) based on the plurality of features extracted from the seen domain task $T_{seen}$). When the parameters $\varphi$ are updated, the feature extractor and the metric function are updated based on the update of the parameters $\varphi$.

In one example, the learning module 20 may include a metric-learning based few-shot learning model. The metric-learning based few-shot learning model may project the instance into an embedding space, and then perform classification using a metric function. Specifically, the prediction is performed according to the equation:

$$\widehat{y_q} = M\left(y_s, E(x_s), E(x_q)\right), \tag{1}$$

Where E is a feature extractor which may be utilized for realizing the feature extractor module 200, and M is the metric function which may be utilized for realizing the metric function module 210.

The present invention applies the DAML to the metric-learning based few-shot learning model as described below. A training scheme is developed to train the metric-learning based few-shot learning model that adapts to the unseen domain.

The training scheme is proposed based on a learning algorithm called model-agnostic meta-learning (MAML). The MAML aims at learning initial parameters. The MAML considers the learning model characterized by a parametric function $f_\varphi$, where $\varphi$ denote the parameters $\varphi$ of the learning model. In the meta-training stage, the parameters $\varphi$ are updated according to the instances of S and a two-stage optimization scheme, where S is the support set of the few-shot classification task in a single domain.

Although the parameters $\varphi$ learned in the MAML show promising adaptation ability on the novel task, the learning model comprising the parameters $\varphi$ cannot generalize to the novel task drawn from the unseen domain. That is, knowledge learned via the MAML is in the single domain. The knowledge may be transferable across the novel task drawn from the single domain, which was already seen in the meta-training stage. However, the knowledge may not be transferable across the unseen domain.

To address CD-FSL tasks, e.g., to classify the few-shot classification tasks in the seen domain and the unseen domain, the DAML is proposed. The DAML aims to learn the domain-agnostic initialized parameters that can generalize and fast adapt to the few-shot classification tasks across the multiple domains. The domain-agnostic initialized parameters are realized by updating a model (e.g., the training module 100, the testing module 120 and the learning module 110 in Fig. 1) through gradient steps on the multiple domains simultaneously. Thus, parameters of the model may be domain-agnostic, and can be applied to initialize the learning model (e.g., the learning module 110 in Fig. 1) for recognizing the novel class in the unseen domain. That is, the parameters $\varphi$ of the learning model can be determined by the parameters of the model for classifying the novel class in the unseen domain.

The pseudo-unseen domain are introduced in the training scheme when updating the parameters $\varphi$. In order to enable ability of domain generalization and domain adaptation, the learning model is operated to learn the parameters $\varphi$ from the seen domain task $T_{seen}$ and the pseudo-unseen task $T_{p\text{-}unseen}$ simultaneously. In addition, taking account of multiple domains (e.g., the seen domain and the pseudo-unseen domain) concurrently prevents the learning model to be distracted by any bias from the single domain. According to the above learning to learn optimization strategy, the present invention explicitly guides the learning model for not only generalizing from the plurality of source domains (e.g., the seen domain and the pseudo-unseen domain) but also fast adaptation to the unseen domain.

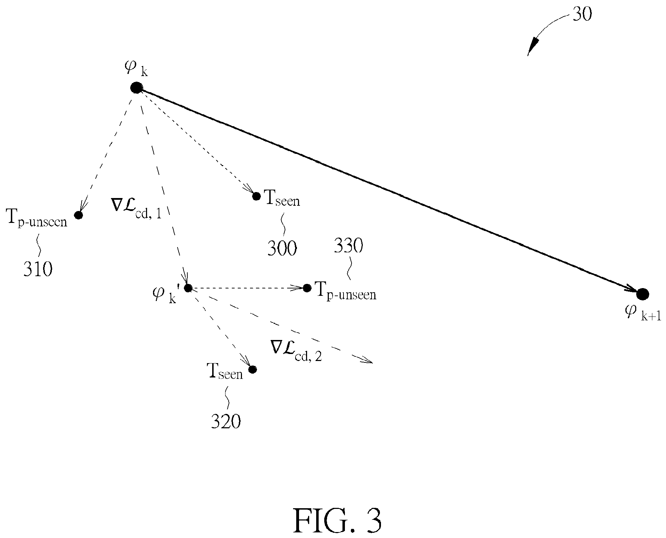

Fig. 3 is a schematic diagram of a training scheme 30 in a kth iteration (e.g., update or optimization) in the meta-training stage in the DAML according to an example of the present invention, where k=0,..., I. The training scheme 30 may be utilized in the computing device 10. The training scheme 30 includes parameters $\varphi_k$, $\varphi_k'$ and $\varphi_{k+1}$, seen domain tasks $T_{seen}$ 300 and $T_{seen}$ 320, pseudo-unseen domain tasks $T_{p\text{-}unseen}$ 310 and $T_{p\text{-}unseen}$ 330 and gradients of cross-domain losses $\nabla\mathcal{L}_{cd,1}$ and $\nabla\mathcal{L}_{cd,2}$.

In detail, an optimization process of the DAML is based on the tasks drawn from the seen domain and the pseudo-unseen domain rather than a standard support set and a standard query set that are drawn from the single domain, as the support set and the query set used in the MAML. Note that there may be multiple pseudo-unseen domains. At each iteration, the parameters of the model are updated using the seen domain task $T_{seen}$ and the pseudo-unseen domain task $T_{p\text{-}unseen}$ according to the following equation:

$$\varphi_k' = \varphi_k - \gamma\nabla_{\varphi_k}\mathcal{L}_{cd,1}\big(f_{\varphi_k},\eta\big). \qquad (2)$$

That is, $\varphi_k'$ are determined according to $\varphi_k$ and $\nabla_{\varphi_k}\mathcal{L}_{cd,1}$. $\gamma$ is a learning rate. $\varphi_k$ are the parameters of the learning module in the kth iteration. $\varphi_k'$ are temporary parameters in the kth iteration. $\nabla_{\varphi_k}\mathcal{L}_{cd,1}$ can be described by the gradient of the cross-domain loss $\nabla\mathcal{L}_{cd,1}$ in Fig. 3, and is a gradient of $\mathcal{L}_{cd,1}$. $\mathcal{L}_{cd,1}$ is a cross-domain loss, and is defined according to the follow equation:

$$\mathcal{L}_{cd,1}\big(f_{\varphi_k},\eta\big) = (1-\eta)\mathcal{L}_{T_{seen}}\big(f_{\varphi_k}\big) + \eta\mathcal{L}_{T_{p\text{-}unseen}}\big(f_{\varphi_k}\big). \qquad (3)$$

That is, $\mathcal{L}_{cd,1}$ is determined according to $\mathcal{L}_{T_{seen}}$, $\mathcal{L}_{T_{p-unseen}}$ and $\eta$. $\eta$ is a weight. $\mathcal{L}_{T_{seen}}$ is the loss of $T_{seen}$.

$T_{seen}$ can be described by $T_{seen}$ 300 in Fig. 3, and $\mathcal{L}_{T_{p-unseen}}$ is the loss of $T_{p-unseen}$. $T_{p-unseen}$ can be described by $T_{p-unseen}$ 310 in Fig. 3.

Since the tasks drawn from the multiple domains in the meta-training stage may exhibit various characteristics which may result in various degrees of difficulty, a fixed value of $\eta$ is not utilized in the present invention. Instead, $\eta$ is updated according to observed difficulties between the data of the seen domain and the data of the pseudo-unseen domain according to the following equation:

$$\eta\left(f_{\varphi_k}\right) = \mathcal{L}_{T_{p-unseen}}\left(f_{\varphi_k}\right) / \left[\mathcal{L}_{T_{seen}}\left(f_{\varphi_k}\right) + \mathcal{L}_{T_{p-unseen}}\left(f_{\varphi_k}\right)\right]. \qquad (4)$$

That is, $\eta$ is determined according to $\mathcal{L}_{T_{seen}}$ and $\mathcal{L}_{T_{p-unseen}}$. Thus, when $T_{p-unseen}$ is more difficult than $T_{seen}$, $T_{p-unseen}$ is given a higher weight for achieving the learning objective, and vice versa. Thus, the learning model (e.g., the learning module 20 in Fig. 2) with $\varphi'_k$ can perform well on not only $T_{seen}$ but also $T_{p-unseen}$. For learning the domain-agnostic initialized parameters, $\varphi_k$ may be updated according to:

$$\varphi_{k+1} = \varphi_k - \alpha \nabla_{\varphi_k} \mathcal{L}_{cd,2}\left(f_{\varphi'_k}, \eta'\right). \qquad (5)$$

That is, $\varphi_{k+1}$ are determined according to $\varphi_k$ and $\nabla_{\varphi_k}\mathcal{L}_{cd,2}$. $\alpha$ denotes a learning rate. $\varphi_{k+1}$ are the parameters of the learning module in the (k+1)th iteration. $\nabla_{\varphi_k}\mathcal{L}_{cd,2}$ can be described by the gradient of the cross-domain loss $\nabla\mathcal{L}_{cd,2}$ in Fig. 3, and is a gradient of $\mathcal{L}_{cd,2}$. $\mathcal{L}_{cd,2}$ is a cross-domain loss, and is defined according to the follow equation:

$$\mathcal{L}_{cd,2}\left(f_{\varphi'_k}, \eta'\right) = (1 - \eta')\mathcal{L}_{T^*_{seen}}\left(f_{\varphi'_k}\right) + \eta'\mathcal{L}_{T^*_{p-unseen}}\left(f_{\varphi'_k}\right). \qquad (6)$$

That is, $\mathcal{L}_{cd,2}$ is determined according to $\mathcal{L}_{T^*_{seen}}$, $\mathcal{L}_{T^*_{p-unseen}}$ and $\eta'$. $\eta'$ is a weight. $\mathcal{L}_{T^*_{seen}}$ is the loss of $T^*_{seen}$. $T^*_{seen}$ can be described by $T_{seen}$ 320 in Fig. 3, and $\mathcal{L}_{T^*_{p-unseen}}$ is the loss of $T^*_{p-unseen}$. $T^*_{p-unseen}$ can be described by $T_{p-unseen}$ 330 in Fig. 3. For the same reason as $\eta$, $\eta'$ is updated according to observed difficulties between the data of the seen domain and the data of the pseudo-unseen domain according to the following equation:

$$\eta'\left(f_{\varphi'_k}\right) = \mathcal{L}_{T^*_{p-unseen}}\left(f_{\varphi'_k}\right) / \left[\mathcal{L}_{T^*_{seen}}\left(f_{\varphi'_k}\right) + \mathcal{L}_{T^*_{p-unseen}}\left(f_{\varphi'_k}\right)\right]. \qquad (7)$$

That is, $\eta'$ is determined according to $\mathcal{L}_{T^*_{seen}}$ and $\mathcal{L}_{T^*_{p-unseen}}$. Thus, when $T^*_{p-unseen}$ is more difficult than $T^*_{seen}$, the learning objective gives a higher weight on $T^*_{p-unseen}$, and vice versa. Thus, $\varphi_{k+1}$ performs well

on not only $T^*_{seen}$ but also $T^*_{p-unseen}$. The present invention randomly generates (e.g., samples) a domain from the plurality of source domains, and generates new tasks (e.g., $T_{seen}$ and $T_{p-unseen}$) from the seen domain and the domain at each optimization step (e.g., eq. (2) and eq. (5)).

In the present invention, a first-order approximation may be applied to the DAML to improve computation efficiency. $\nabla_{\varphi_k} \mathcal{L}_{cd,2}$ may be approximated to $\nabla_{\varphi'_k} \mathcal{L}_{cd,2}$ which can be described by $\nabla \mathcal{L}_{cd,2}$ in Fig. 3. Thus, $\nabla \mathcal{L}_{cd,2}$ can be utilized on $\varphi_k$. Description of the first-order approximation applied by the DAML is stated as follows.

For simplicity, $\mathcal{L}_{T^*_{seen}}$ in $\mathcal{L}_{cd,2}$ is derived as an example. For a gradient on $\mathcal{L}_{T^*_{seen}}\left(f_{\varphi'}\right)$ with respect to $\varphi$, the ith element is an aggregate result of all partial derivatives. Thus, the following equation can be obtained:

$$\frac{\partial \mathcal{L}_{T^*_{seen}}\left(f_{\varphi'}\right)}{\partial \varphi_i} = \sum_j \frac{\partial \mathcal{L}_{T^*_{seen}}\left(f_{\varphi'}\right)}{\partial \varphi'_j} \frac{\partial}{\partial \varphi_i} \left[\varphi_j - \gamma \left(\frac{\partial \mathcal{L}_{T_{seen}}(f_\varphi)}{\partial \varphi_j} + \frac{\partial \mathcal{L}_{T_{p-unseen}}(f_\varphi)}{\partial \varphi_j}\right)\right]. \quad (8)$$

The last two second-order gradients can be eliminated. As i = j, the equation (8) is reduced to $\partial \mathcal{L}_{T^*_{seen}}\left(f_{\varphi'}\right)/\partial \varphi_i = \partial \mathcal{L}_{T^*_{seen}}\left(f_{\varphi'}\right)/\partial \varphi'_i$, suggesting that the gradient direction on $\varphi'$ may be utilized to update $\varphi$. On the other hand, as i ≠ j, the equation (8) is reduced to 0.

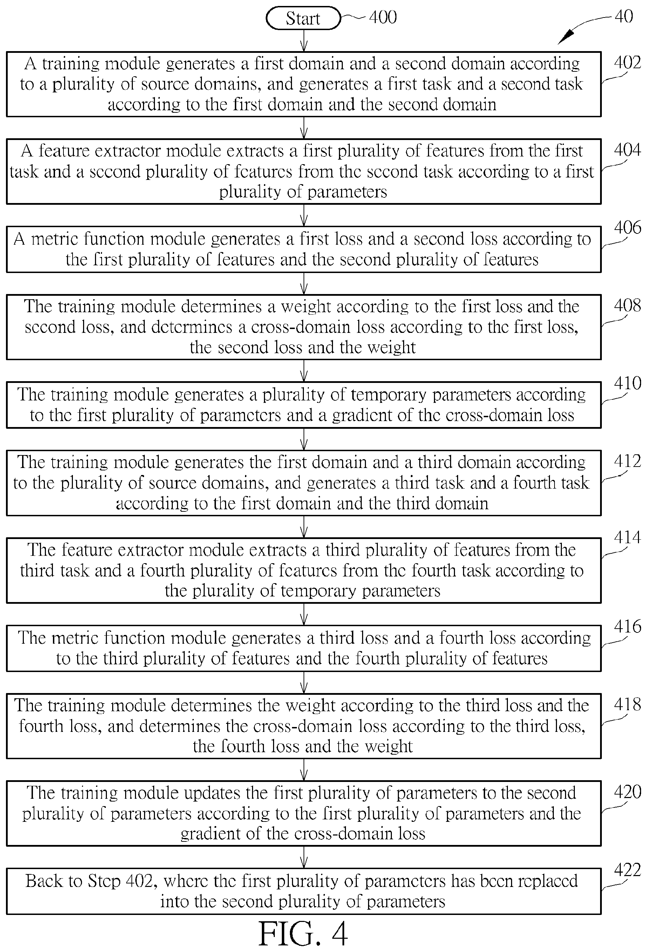

Fig. 4 is a flowchart of a process 40 of operations of the DAML to an example of the present invention. The process 40 may be utilized in the computing device 10, and includes the following steps:

Step 400: Start.

Step 402: A training module generates a first domain and a second domain according to a plurality of source domains, and generates a first task and a second task according to the first domain and the second domain.

Step 404: A feature extractor module extracts a first plurality of features from the first task and a second plurality of features from the second task according to a first plurality of parameters.

Step 406: A metric function module generates a first loss and a second loss according to the first plurality of features and the second plurality of features.

Step 408: The training module determines a weight according to the first loss and the second loss, and determines a cross-domain loss according to the first loss, the second loss and the weight.

Step 410: The training module generates a plurality of temporary parameters according to the first plurality of parameters and a gradient of the cross-domain loss.

Step 412: The training module generates the first domain and a third domain according to the plurality of source domains, and generates a third task and a fourth task according to the first domain and the third domain.

Step 414: The feature extractor module extracts a third plurality of features from the third task and a fourth plurality of features from the fourth task according to the plurality of temporary parameters.

Step 416: The metric function module generates a third loss and a fourth loss according to the third plurality of features and the fourth plurality of features.

Step 418: The training module determines the weight according to the third loss and the fourth loss, and determines the cross-domain loss according to the third loss, the fourth loss and the weight.

Step 420: The training module updates the first plurality of parameters to the second plurality of parameters according to the first plurality of parameters and the gradient of the cross-domain loss.

Step 422: Back to Step 402, where the first plurality of parameters has been replaced into the second plurality of parameters.

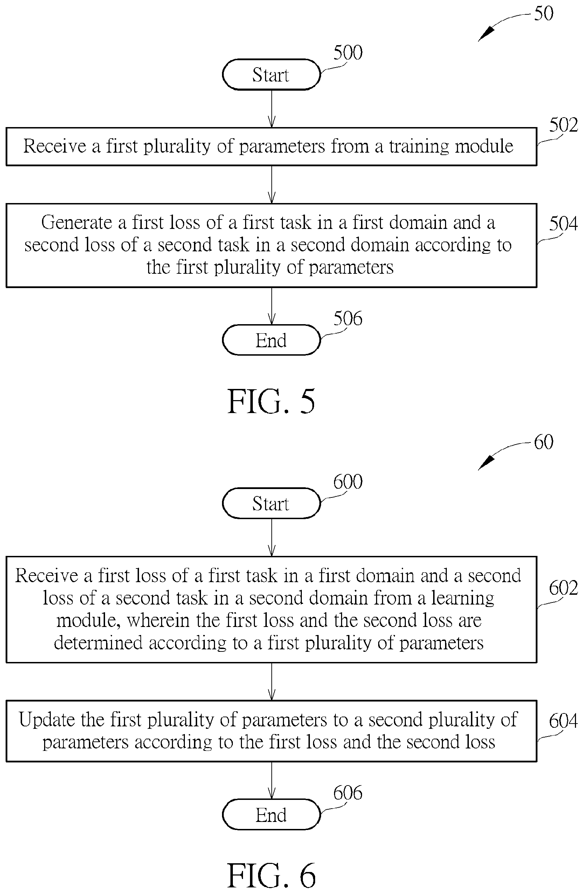

Operations of the learning module 110 in the above examples can be summarized into a process 50 shown in Fig. 5. The process 50 is utilized in the learning module 110, and includes the following steps:

Step 500: Start.

Step 502: Receive a first plurality of parameters from a training module.

Step 504: Generate a first loss of a first task in a first domain and a second loss of a second task in a second domain according to the first plurality of parameters.

Step 506: End.

Operations of the training module 100 in the above examples can be summarized into a process 60 shown in Fig. 6. The process 60 is utilized in the training module 100, and includes the following steps:

Step 600: Start.

Step 602: Receive a first loss of a first task in a first domain and a second loss of a second task in a second domain from a learning module, wherein the first loss and the second loss are determined according to a first plurality of parameters.
Step 604: Update the first plurality of parameters to a second plurality of parameters according to the first loss and the second loss.

Step 606: End.

According to the above descriptions of the DAML, it can be obtained that the learning objective of the DAML is to derive the domain-agnostic initialized parameters that can adapt to the tasks drawn from the multiple domains. With joint consideration of the few-shot classification tasks and cross-domain settings in the meta-training stage, the parameters derived according to the DAML is domain-agnostic, and is applicable to the novel class in the unseen domain.
The operation of "determine" described above may be replaced by the operation of "compute", "calculate", "obtain", "generate", "output, "use", "choose/select", "decide" or "is configured to". The term of "according to" described above may be replaced by "in response to". The term of "via" described above may be replaced by "on", "in" or "at".
Those skilled in the art should readily make combinations, modifications and/or alterations on the abovementioned description and examples. The abovementioned training module, learning module, description, functions and/or processes including suggested steps can be realized by means that could be hardware, software, firmware (known as a combination of a hardware device and computer instructions and data that reside as read-only software on the hardware device), an electronic system, or combination thereof.
Examples of the hardware may include analog circuit(s), digital circuit(s) and/or mixed circuit(s). For example, the hardware may include application-specific integrated circuit(s) (ASIC(s)), field programmable gate array(s) (FPGA(s)), programmable logic device(s), coupled hardware components or combination thereof. In one example, the hardware includes general-purpose processor(s), microprocessor(s), controller(s), digital signal processor(s) (DSP(s)) or combination thereof.
Examples of the software may include set(s) of codes, set(s) of instructions and/or set(s) of functions retained (e.g., stored) in a storage unit, e.g., a computer-readable medium. The computer-readable medium may include Subscriber Identity Module (SIM), Read-Only Memory (ROM), flash memory, Random Access Memory (RAM), CD-ROM/DVD-ROM/BD-ROM, magnetic tape, hard disk, optical data storage device, non-volatile storage unit, or combination thereof. The computer-readable medium (e.g., storage unit) may be coupled to at least one processor internally (e.g., integrated) or externally (e.g., separated). The at least one processor which may include one or more modules may (e.g., be configured to) execute the software in the computer-readable medium. The set(s) of codes, the set(s) of instructions and/or the set(s) of functions may cause the at least one processor, the module(s), the hardware and/or the electronic system to perform the related steps.
To sum up, the present invention provides a computing device for handling DAML, which is capable of processing CD-FSL tasks. Modules of the computing device are updated through gradient steps on multiple domains simultaneously. Thus, the modules can not only classify tasks from the seen domain but also tasks from the unseen domain.

**Claims**

1. A learning module (110) for handling classification tasks, **characterized by** performing the following instructions:

   receiving a first plurality of parameters from a training module (502); and
   generating a first loss of a first task in a first domain and a second loss of a second task in a second domain according to the first plurality of parameters (504).

2. The learning module of claim 1, **characterized in that** the learning module comprises:

a feature extractor module, for extracting a first plurality of features from the first task and a second plurality of features from the second task according to the first plurality of parameters; and

a metric function module, coupled to the feature extractor module, for generating the first loss and the second loss according to the first plurality of features and the second plurality of features.

3. The learning module of claim 1 or 2, **characterized in that** the learning module further performs the following instructions:

receiving a second plurality of parameters from the training module, wherein the second plurality of parameters are generated by the training module according to the first loss and the second loss; and

generating a third loss of the first task and a fourth loss of the second task according to the second plurality of parameters.

4. The learning module of claim 3, **characterized in that** the learning module further performs the following instructions:

generating a fifth loss of a third task in the first domain and a sixth loss of a fourth task in a third domain according to a plurality of temporary parameters.

5. The learning module of claim 4, **characterized in that** the plurality of temporary parameters are determined according to the first plurality of parameters and a gradient of a first cross-domain loss.

6. The learning module of claim 4, **characterized in that** the second plurality of parameters are determined according to the first plurality of parameters and a gradient of a second cross-domain loss.

7. The learning module of claim 6, **characterized in that** the gradient of the second cross-domain loss is determined according to the fifth loss, the sixth loss and a second weight.

8. The learning module of claim 7, **characterized in that** the second weight is determined according to the fifth loss and the sixth loss.

9. The learning module of claim 8, **characterized in that** the fifth loss and the sixth loss is related to difficulties of the third task and the fourth task.

10. A training module (100) for handling classification tasks, **characterized by** performing the following instructions:

receiving a first loss of a first task in a first domain and a second loss of a second task in a second domain from a learning module, wherein the first loss and the second loss are determined according to a first plurality of parameters (602); and

updating the first plurality of parameters to a second plurality of parameters according to the first loss and the second loss (604).

11. The training module of claim 10, **characterized in that** the training module further performs the following instruction:

generating a plurality of temporary parameters according to the first plurality of parameters and a gradient of a first cross-domain loss.

12. The training module of claim 5 or 11, **characterized in that** the gradient of the first cross-domain loss is determined according to the first loss, the second loss and a first weight.

13. The training module of claim 12, **characterized in that** the first weight is determined according to the first loss and the second loss.

14. The training module of claim 13, **characterized in that** the first loss and the second loss is related to difficulties of the first task and the second task.

15. The training module of claim 11, **characterized in that** the training module further performs the following instructions:

receiving a third loss of a third task in the first domain and a fourth loss of a fourth task in a third domain from the learning module,; and
updating the first plurality of parameters to the second plurality of parameters according to the first plurality of parameters and a gradient of a second cross-domain loss.

16. The training module of claim 15, **characterized in that** the third loss and the fourth loss are determined according to the plurality of temporary parameters.

17. The training module of claim 4 or 15, **characterized in that** the first domain and the third domain are generated according to a plurality of source domains.

18. The training module of claim 15, **characterized in that** the gradient of the second cross-domain loss is determined according to the third loss, the fourth loss and a second weight.

19. The training module of claim 18, **characterized in that** the second weight is determined according to the third loss and the fourth loss.

20. The learning module of claim 19, **characterized in that** the third loss and the fourth loss is related to difficulties of the third task and the fourth task.

10

FIG. 1

20

200                          210

T → | Feature extractor module | → | Metric function module | → $\mathcal{L}$

FIG. 2

FIG. 3

Start ~400

~40

A training module generates a first domain and a second domain according to a plurality of source domains, and generates a first task and a second task according to the first domain and the second domain
402

A feature extractor module extracts a first plurality of features from the first task and a second plurality of features from the second task according to a first plurality of parameters
404

A metric function module generates a first loss and a second loss according to the first plurality of features and the second plurality of features
406

The training module determines a weight according to the first loss and the second loss, and determines a cross-domain loss according to the first loss, the second loss and the weight
408

The training module generates a plurality of temporary parameters according to the first plurality of parameters and a gradient of the cross-domain loss
410

The training module generates the first domain and a third domain according to the plurality of source domains, and generates a third task and a fourth task according to the first domain and the third domain
412

The feature extractor module extracts a third plurality of features from the third task and a fourth plurality of features from the fourth task according to the plurality of temporary parameters
414

The metric function module generates a third loss and a fourth loss according to the third plurality of features and the fourth plurality of features
416

The training module determines the weight according to the third loss and the fourth loss, and determines the cross-domain loss according to the third loss, the fourth loss and the weight
418

The training module updates the first plurality of parameters to the second plurality of parameters according to the first plurality of parameters and the gradient of the cross-domain loss
420

Back to Step 402, where the first plurality of parameters has been replaced into the second plurality of parameters
422

FIG. 4

500

Start

502

Receive a first plurality of parameters from a training module

504

Generate a first loss of a first task in a first domain and a second loss of a second task in a second domain according to the first plurality of parameters

506

End

FIG. 5

600

Start

602

Receive a first loss of a first task in a first domain and a second loss of a second task in a second domain from a learning module, wherein the first loss and the second loss are determined according to a first plurality of parameters

604

Update the first plurality of parameters to a second plurality of parameters according to the first loss and the second loss

606

End

FIG. 6

Europäisches
Patentamt

European
Patent Office

Office européen
des brevets

# EUROPEAN SEARCH REPORT

Application Number

EP 22 15 1552

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHUMAN PENG ET AL: "Combining Domain-Specific Meta-Learners in the Parameter Space for Cross-Domain Few-Shot Classification", ARXIV.ORG, CORNELL UNIVERSITY LIBRARY, 201 OLIN LIBRARY CORNELL UNIVERSITY ITHACA, NY 14853, 31 October 2020 (2020-10-31), XP081803774, * section 1; page 1 * * sections 3-4; page 3 - page 6 * | 1-20 | INV. G06N20/00 |

-----

TECHNICAL FIELDS
SEARCHED (IPC)

G06N

The present search report has been drawn up for all claims

| Place of search | Date of completion of the search | Examiner |
|---|---|---|
| Munich | 30 June 2022 | Maghroum, Walid |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.............................................................................................

& : member of the same patent family, corresponding
    document

EPO FORM 1503 03.82 (P04C01)

1